# EUROPEAN PATENT APPLICATION

(11) **EP 3 361 488 A1**
(43) Date of publication of application: **15.08.2018**
(21) Application number: 17290019.3
(22) Date of filing: 14.02.2017
(51) Int. Cl.: H01H 9/54, H01H 33/59, H01H 79/00, H02H 9/04

(54) **A BY-PASS SWITCH AND BY-PASS METHOD**

(71) Applicant: General Electric Technology GmbH, 5400 Baden (CH)
(72) Inventor: Yang, Yang, 69100 Villeurbanne (FR); Grieshaber, Wolfgang, 69100 Villeurbanne (FR); Berard, David, 69100 Villeurbanne (FR)
(74) Representative: Fischer, Michael Maria

(57) **Abstract**

There is disclosed a by-pass switch arrangement 106 for by-passing a current path in a high voltage direct current (HVDC) network 100, the by-pass switch arrangement comprising: two switch terminals 202, 204 for coupling to the current path; first and second parallel by-pass pathways 210, 220 between the switch terminals for selectively conducting a by-pass current between the switch terminals. The first by-pass pathway comprises a primary switch 212 which is a solid-state switch or a triggered spark gap switch; and the second by-pass pathway comprises a secondary switch 222 which is an electro-mechanical switch having a longer minimum closing period than the primary switch. A switch controller 240 of the switch arrangement 106 is configured to control closing of the primary switch 212 and the secondary switch 222 in response to a bypass instruction so that the by-pass current initially flows through the first by-pass pathway 210 and is subsequently commutated to the second by-pass pathway 220.

## Description

The invention relates to a by-pass switch for by-passing a current pathway in a high voltage direct current (HVDC) network.

There is often a need to isolate equipment or parts of a circuit or network, usually to protect apparatus from damage in the event of a fault. A current pathway through such equipment may be interrupted, for example using a circuit breaker.

In some networks, it may also be desirable to by-pass such a current pathway to maintain electrical communication in the network. One such example is a multi-terminal High Voltage Direct Current (HVDC) network. Such networks may have a plurality of network sections electrically connected by interconnecting power transmission lines.

According to a first aspect, there is provided a by-pass switch arrangement for by-passing a current path in a high voltage direct current (HVDC) network, the by-pass switch arrangement comprising: two switch terminals for coupling the current path; first and second parallel by-pass pathways between the switch terminals for selectively conducting a by-pass current between the switch terminals; wherein the first by-pass pathway comprises a primary switch which is a solid-state switch or a triggered spark gap switch; wherein the second by-pass pathway comprises a secondary switch which is an electro-mechanical switch having a longer minimum closing period than the primary switch; and a switch controller configured to control closing of the primary switch and the secondary switch in response to a by-pass instruction so that the by-pass current initially flows through the first by-pass pathway and is subsequently commutated to the second by-pass pathway.

The primary switch may not be provided with a cooling system (such as a cooling system in which fluid, such as a gas or a liquid, is circulated) for heat dissipation, other than natural heat dissipation for example to the ambient air. In other words, the primary switch may be uncooled or free of an active cooling system (i.e. free of active cooling such as forced convection or circulation of a fluid cooling medium in an enclosed cooling system).

The primary switch may have a closing period of no more than 1 ms.

The switch controller may be configured to initiate closing of the secondary switch in response to receipt of the by-pass instruction. The switch controller may subsequently initiate closing of the primary switch after a delay corresponding to a closure pre-condition for the primary switch. For example, when the primary switch is a solid-state switch, the switch controller may subsequently initiate closing of the primary switch after a delay corresponding to charging of drive circuitry for the primary switch. Accordingly, for a solid-state switch the closure pre-condition may correspond to the charging of the drive circuitry.

When the primary switch is a triggered spark gap switch, the switch controller may subsequently initiate closing of the primary switch after a delay until a threshold voltage is applied over the switch. In particular, a triggered spark gap switch may only be triggered when the applied voltage is above a threshold. Accordingly, the closure pre-condition a triggered spark gap switch may relate to the applied voltage over the switch.

The delay may be predetermined or the switch controller may be configured to initiate closing (thereby ending the delay) based on evaluating a closure criterion relating to the closure pre-condition.

The switch controller may be configured to initiate closing of the primary switch based on evaluating a closure criterion for the primary switch which is a function of a voltage difference across the by-pass switch arrangement.

The by-pass switch arrangement may further comprise a voltage divider in parallel with the first and second by-pass pathways. The switch controller may be configured to Initiate closing of the primary switch based on evaluating a closure criterion for the primary switch which is a function of a voltage output of the voltage divider.

The delay corresponding to charging of drive circuitry for the primary switch may correspond to a period after receipt of the by-pass instruction until it is determined that the closure criterion is met. The closure criterion for the primary switch may be evaluated repeatedly. The switch controller may begin evaluating the closure criterion in response to receipt of the by-pass instruction.

For example, the closure criterion for the primary switch may be that a voltage output of the voltage divider is greater than a threshold, or a voltage difference between a line-to-ground voltage at both switch terminals lies within a pre-determined range (as described below).
The switch controller may be configured to initiate closing of the primary switch in response to determining that the voltage output of the voltage divider is above a threshold.

The switch controller may be configured to initiate closing of the primary switch based on evaluating a closure criterion for the primary switch which is a function of respective voltage outputs of two line-to-ground voltage dividers coupled to the respective switch terminals.

The primary switch may be solid-state switch, In particular, the solid-state switch may be a power semiconductor switch. The primary switch may comprise a thyristor or a thyristor stack. The primary switch may comprise an IGBT-based switch and/or a MOSFET switch.

The primary switch may comprise a triggered spark gap switch. The triggered spark gap switch may comprise one or more electrode gaps that can be triggered to conduct current. In an example triggered spark gap switch, opposing electrodes may be spaced apart by a gas (such as air) which may ionize when triggered to conduct current. The triggered spark gap switch may comprise a triggered spark vacuum gap switch, in which there is a vacuum gap between opposing spaced apart electrodes. Current conduction between the electrodes may occur, for example, through a plasma of metal ions or electrons dispersed from the electrodes. The triggered vacuum gap switch may be triggered by applying a trigger voltage pulse to an electrode. A triggered vacuum gap switch is a triggered spark gap switch as a spark occurs between the electrodes, even if the spark is not visible in the vacuum. The triggered spark gap switch may have at least one trigger electrode to initiate current conduction across the gap (for example by applying a voltage pulse to initiate gas breakdown or ion/electron discharge from the electrodes).

The first by-pass pathway may comprise two primary switches (for example two thyristors or thyristor stacks) arranged in antiparallel.

There may be a diode bridge between the two switch terminals having two outputs of constant polarity. The primary switch may be disposed between the two outputs of the diode bridge. The first by-pass pathway may be at least partly disposed between the two outputs of the diode bridge. The second by-pass pathway may be wholly outside of (i.e. it may by-pass) the diode bridge.

The by-pass switch arrangement may further comprise two primary disconnectors, each primary disconnector in series with a respective one of the switch terminals, wherein the primary disconnectors are configured to open to isolate a core part of the by-pass switch arrangement comprising the first and second by-pass pathways. The primary disconnectors may enable the core party of the by-pass switch arrangement to be disconnected, for example, for maintenance.

The by-pass switch arrangement may further comprise an auxiliary by-pass pathway between the switch terminals and in parallel with the primary disconnectors and the core part of the by-pass switch arrangement. The auxiliary by-pass pathway may comprise a switch for maintaining a by-pass current when the core part of the by-pass arrangement is isolated. In particular, the switch may be normally open, but may be closed to by-pass the core part of the by-pass switch arrangement, such that the core part of the by-pass switch arrangement can be disconnected whilst a by-pass current is maintained, as described above.

According to a second aspect there is provided a method of by-passing a current pathway in a direct current (dc) network using a by-pass switch arrangement in accordance with the first aspect coupled to the current pathway at the switch terminals, the method comprising: closing the primary switch of the first by-pass pathway; and closing the secondary switch of the second by-pass pathway; wherein closing of the primary switch is completed before closing of the secondary switch, so that a by-pass current initially flows through the first by-pass pathway and is subsequently commutated to the second by-pass pathway.

The primary switch may be re-opened after completion of closing of the secondary switch.

The method may further comprising detecting current reversal before closure of the secondary switch is completed, and re-initiating closure of the primary switch.

Preferred embodiments of the invention will now be described, by way of non-limiting examples only, with reference to the accompanying drawings in which:
**Figure 1** schematically shows a multi-terminal HVDC network including a by-pass switch arrangement;
**Figure 2** schematically shows an example by-pass switch arrangement;
**Figure 3** schematically shows an example by-pass switch arrangement including a disconnector arrangement;
**Figure 4** schematically shows an example by-pass switch arrangement including a diode bridge;
**Figure 5** schematically shows a further example by-pass switch arrangement including a diode bridge;
**Figure 6** schematically shows an example by-pass switch arrangement;
**Figure 7** schematically shows the by-pass switch arrangement of Figure 6 in use; and
**Figure 8** shows an example by-pass method;
**Figures 9** to 12 schematically show the by-pass circuit of Figure 6 in successive stages of the by-pass method of Figure 8;

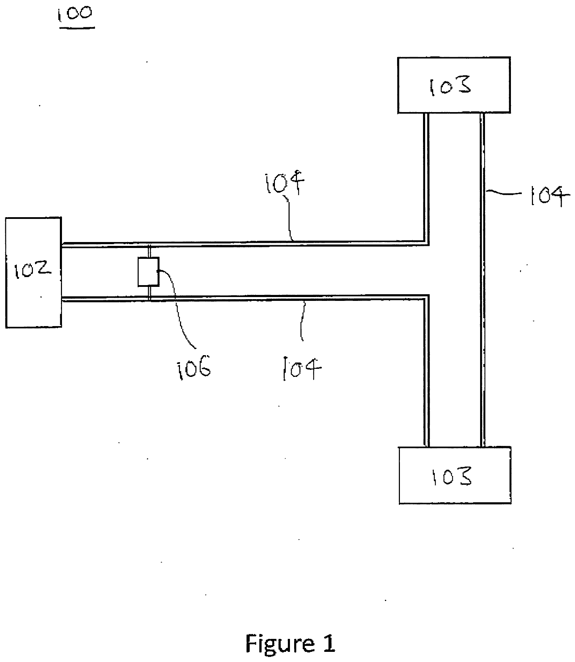

**Figure 1** shows a high voltage direct current (HVDC) network 100 comprising a plurality of network sections 102,103 interconnected by transmission lines 104. For example, each network section 102, 103 may comprise a converter, such as an alternating current (ac) to direct current (dc) converter. Examples include voltage source converters and line-commutated converters for HVDC networks.

In the example network of Figure 1, each network section 102, 103 is coupled to multiple transmission lines 104. Each respective network section 102, 103 may be isolated from the network 100 using a circuit breaker for each connection of a transmission line, for example, to protect the respective network section from faults elsewhere in the network, or limit fault transmission through the network.

As shown in Figure, 1, two transmission lines 104 extending from one of the network sections 102 are coupled by a by-pass switch arrangement 106 between them to by-pass the respective network section 102.

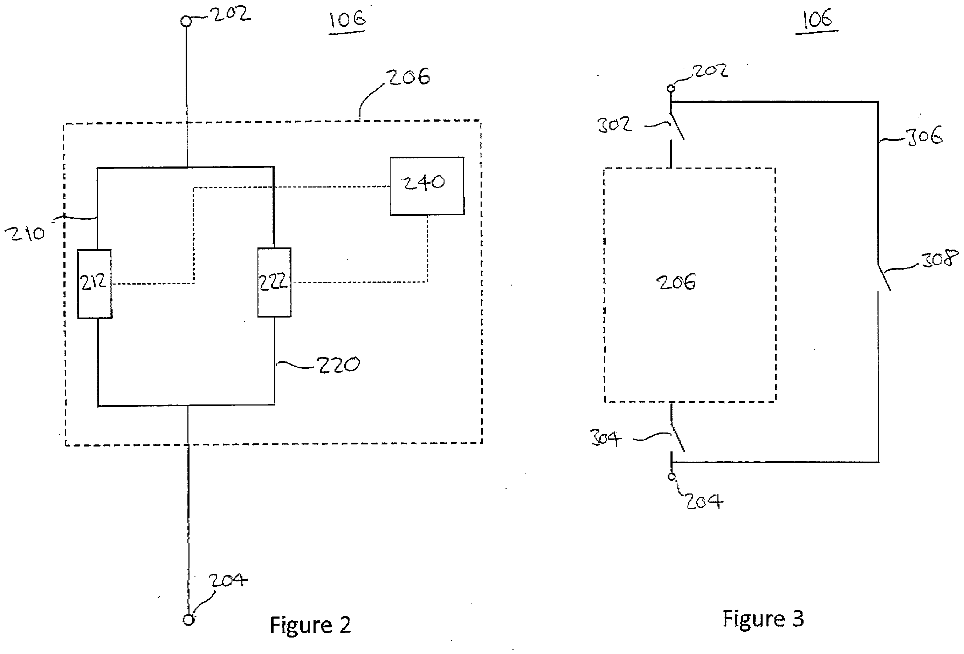

**Figure 2** shows an example by-pass switch arrangement 106. The by-pass switch arrangement 106 includes first and second by-pass pathways 210, 220 arranged in parallel with one another between respective terminals 202, 204 of the by pass switch arrangement 106. The terminals 202, 204 are for connecting to a current pathway to be by-passed, for example by connecting the terminals to the transmission lines 104 as shown in Figure 1 to by-pass the respective network section 102.

The first by-pass pathway 210 includes a primary switch 212 which in this example is a fast-closing solid-state switch; whereas the second by-pass pathway 220 includes an electro-mechanical switch 222. In other examples, the primary switch may be of another fast-closing type, such as a spark gap switch.

The primary switch 212 has a faster minimum closing time than the secondary switch 222, as will be described in detail below. The switch arrangement further comprises a switch controller 240 configured to receive a by-pass instruction and control closing of the primary and secondary switches 212, 222 so that in use, the primary switch 212 completes closing first to rapidly establish a by-pass current between the terminals 202, 204 through the first by-pass pathway 210, and subsequent closure of the secondary switch 222 results in the by-pass current commutating to the secondary by-pass pathway, as will be described in detail below.

The by-pass switch arrangement 106 comprises a core part 206 between the terminals comprising the first and second by-pass pathways 210, 220 and the switch controller 240, as illustrated by the dashed box 204 in Figure 2.

**Figure 3** shows an example by-pass switch arrangement 106 In which there is a primary disconnector 302, 304 associated with each respective terminal 202, 204, each primary disconnector 302, 304 being located in series between the core part 206 and the respective terminal 202, 204. The primary disconnectors are configured to remain closed in normal operation, and to open to allow disconnection of the core part 206 of the by-pass switch arrangement from a circuit to which the by-pass switch arrangement is coupled, for example for maintenance or replacement.

Figure 3 also shows an auxiliary by-pass pathway 306 extending between the terminals 202, 204 and by-passing the core part 206 of the switch arrangement 106 and the primary disconnectors 302, 304. The auxiliary by-pass pathway 306 comprises an auxiliary switch 308. In use the auxiliary switch 308 is normally open, but can be selectively closed. For example, when the by-pass switch arrangement 106 is installed - In a circuit and conducting a by-pass current therethrough, it may be desirable to maintain the by-pass current when disconnecting the core part 206 of the switch arrangement 106 for maintenance. By closing the auxiliary switch 308, a by-pass current can be commutated to the auxiliary by-pass pathway 308, and the core part 206 can then be disconnected using the primary disconnectors 302, 304.

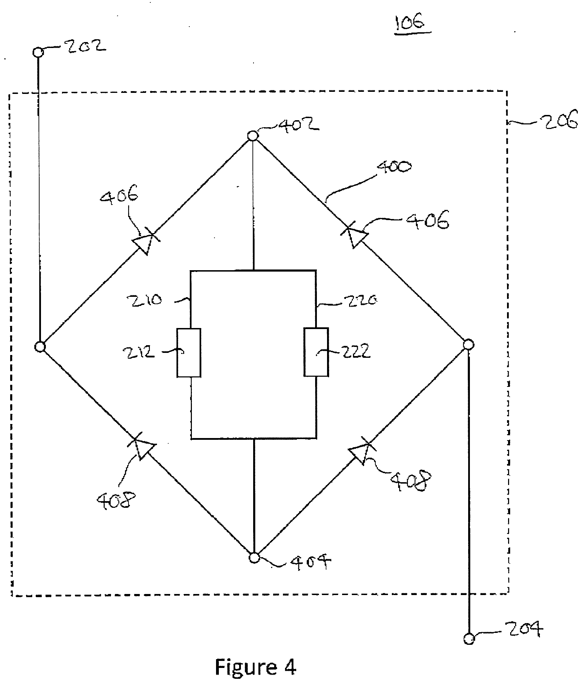

Further example switch arrangements as will be described with respect to Figures 4-7 and 9-12 show a core part of the switch arrangement only, for clarity. However, it will be appreciated that the primary disconnectors and/or auxiliary by-pass pathway as described above with respect to Figure 3 can be applied to any of the by-pass switch arrangements as described herein.

**Figure 4** shows a further example by-pass switch arrangement 106 in which the first and second by-pass pathways 210, 220 are disposed within a diode bridge 400 to maintain constant polarity in the by-pass pathways 290, 220 irrespective of the polarity of the switch terminal connections 202, 204. The diode bridge has a first output in electrical communication with each switch terminal 202, 204 via respective diodes 406; and a second output in electrical communication with each switch terminal 202, 204 via respective diodes 408.

In this example, the parallel arrangement of the first and second by-pass pathways 210, 220 is disposed between the first and second outputs 402, 404 of the diode bridge 400. In this example, the diode bridge 400 is within the core part 206 of the switch arrangement, but in other examples the output terminals 402, 404 may be outside of the core part 206 of the switch arrangement, such that disconnectors may be used to disconnect the core part 206 (i.e. the first and second by-pass pathways 210, 220 and switch controller) independently of the diode bridge.

The by-pass switch arrangement 106 of Figure 4 includes a switch controller as described above, which is not shown in the drawing for clarity.

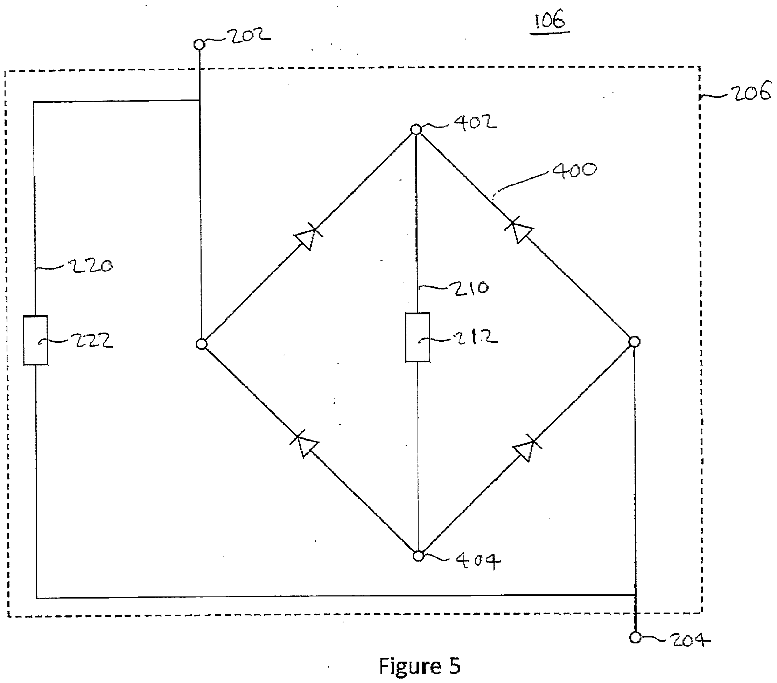

**Figure 5** shows a further example by-pass switch arrangement 106 which differs from that described above with respect to Figure 4 in that the primary switch 212 is disposed within the diode bridge 400 such that the first by-pass pathway 210 at least partly extends through the diode bridge 400, whereas the second by-pass pathway 220 including the secondary switch 222 is disposed outside of the diode bridge 400. In other words, the diode bridge 400 is within the first by-pass pathway, and thereby in parallel with the second by-pass pathway 220. In this example, the second by-pass pathway 220 is outside the diode bridge (i.e. it by-passes it). This may reduce or eliminate any requirement for cooling of the diode bridge.

This arrangement may be appropriate, for example, when the primary switch 212 requires an input of constant polarity, but the secondary switch does not.

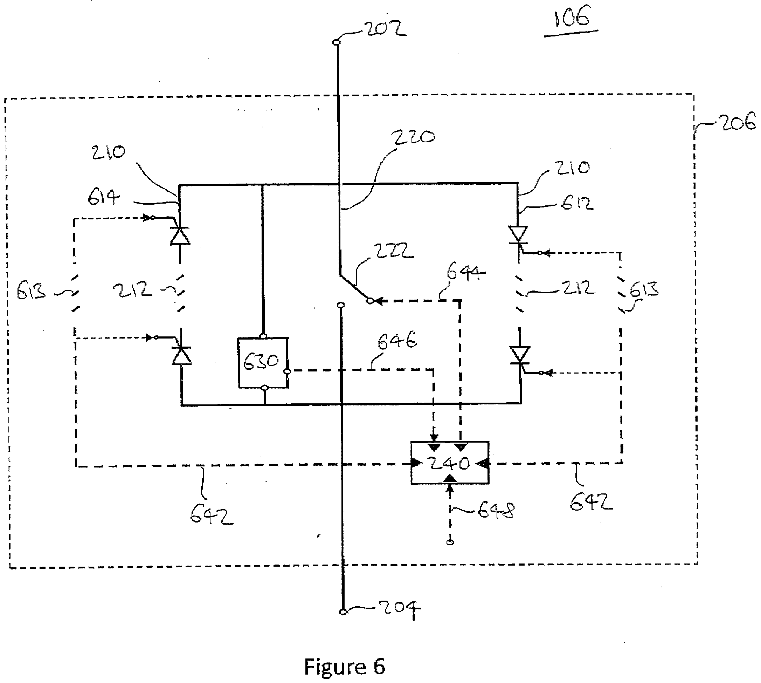

In further examples (as will be described below with respect to Figure 6), there may be two primary switches arranged in anti-parallel on respective branches. For example, each branch may have a primary switch which enables current flow in one direction only, or a diode to enable such uni-directional current flow in series with a respective primary switch.

In each of the examples described herein, the primary switch 212 may be a solid-state or spark gap switch. One example of suitable solid-state switches Is a thyristor stack, as will be described in detail with respect to Figure 6. Further examples include voltage controlled switches, such as field effect transistor (FET) devices, or IGBT-based switches or MOSFET switches.

Example spark gap switches include a triggered gas spark gap switch, or a triggered vacuum spark gap switch. In an example of such a switch, opposing electrodes corresponding to the two sides of the switch are separated within a chamber by a spark gap. Current conduction between the electrodes is prevented when the voltage between the electrodes is below threshold voltage. In a triggered gas spark gap switch, the threshold voltage is associated with the breakdown voltage of the gas (such as air) between the electrodes, whereas in a triggered vacuum spark gap switch, the threshold voltage is associated with that required for electrons or metal ions to be dispersed from the electrodes into the gap to enable current transfer. An example spark gap switch may include a trigger electrode in communication with the gap. In use, a voltage pulse is selectively applied through the trigger electrode to cause breakdown of the gas (gas spark gap switch) or electron/ion dispersion (vacuum spark gap switch) to enable current transfer through the gap. Once initiated, the current transfer is maintained whilst there is a sufficient amount of current through the gap.

**Figure 6** shows an example by-pass switch arrangement 106 in which the primary switch is a thyristor stack. In this particular example, the first by-pass pathway 210 includes two branches 612, 614 having respective solid-state switches 212 and arranged in anti-parallel with respect to each other. In other words, a first branch 612 and first solid-state switch 212 of the first by-pass pathway 210 is configured for carrying current between the terminals 202, 204 in a first direction, and a second branch 614 and second solid-state switch 212 of the first by-pass pathway 210 is configured for carrying current in the opposite direction.

In this particular example, the solid-state switch 212 of each branch is a thyristor stack (or "thyristor string") comprising a plurality of thyristors arranged in series relation. The first branch 612 (on the right in Figure 6) has a thyristor stack solid-state switch 212 configured to carry current from the first terminal 202 of the by-pass switch arrangement 106 (the upper terminal in Figure 6) to the second terminal 204 (the lower terminal in Figure 6). The second branch 614 (on the left in Figure 6) has a thyristor stack solid-state switch 212 configured to carry current along the opposite direction from the second terminal 204 to the first terminal 202. Each solid-state switch 212 is provided with associated drive circuitry 613 for controlling the switch as will be described in detail below.

A dual-branch arrangement of the first by-pass pathway as described above may be beneficial when each primary switch 212 only allows for current flow in one direction.

The secondary, electro-mechanical switch 222 is configured to make a connection between electrical contacts to conduct high voltage direct current (e.g. 3300A, 500kV) for example, with relatively low power losses (for example, approximately 1 kW). Example electro-mechanical switches are disclosed in European Patent EP 2 237 301.

The by-pass switch arrangement 106 further comprises a voltage divider 630 in parallel with the first by-pass pathway 210 and the second by-pass pathway 220 between the terminals 202, 204. The voltage divider 630 provides a low-current connection between the first and second terminals 202, 204 and has a voltage output proportional to the voltage difference between the first and second terminals 202, 204.

The by-pass switch arrangement further comprises a switch controller 240 coupled to the or each solid-state switch 212 of the first by-pass pathway and to the electro-mechanical switch 222 of the second by-pass pathway by respective control lines 642, 644.

In this example, the switch controller 240 is coupled to the voltage divider by a voltage information control line 646 for conveying voltage information relating to the voltage output of the voltage divider 240. For example, the voltage Information may be the voltage difference across the voltage output terminal and one of the terminals 202, 204, or a signal representing the voltage difference.

In other examples, a line-to-ground voltage associated with each switch terminal may be determined by equipment external to the switch arrangement, and a voltage difference between the switch terminals 202 and 204 may be calculated based on the difference between the two line-to-ground voltages measured at said terminals. For example, there may be respective line-to-ground voltage dividers installed at each switch terminal 202, 204, or in electrical communication with each switch terminal.

The switch controller 240 is configured to receive a by-pass instruction from a trigger control line 648 (i.e. a control line coupled to an external controller for initiating a by-pass operation).

Control lines coupling the switch controller to any or all of the solid-state switch 212, electro-mechanical switch 222, voltage divider 630 and fault detector may provide insulation for the switch controller from the high voltage of the by-pass pathways and the voltage divider. Accordingly, the switch controller may be at low voltage relative ground potential. In this particular example, the control lines to the solid state switches comprise optical cables or optical fibers for sending optical signals to the switch controller 240.

The switch controller 240 is configured to control a by-pass operation of the by-pass switch arrangement in which the solid-state switch 212 and the electro-mechanical switch 222 are closed to conduct a by-pass current between the terminals 202, 204, as will be described in detail below.

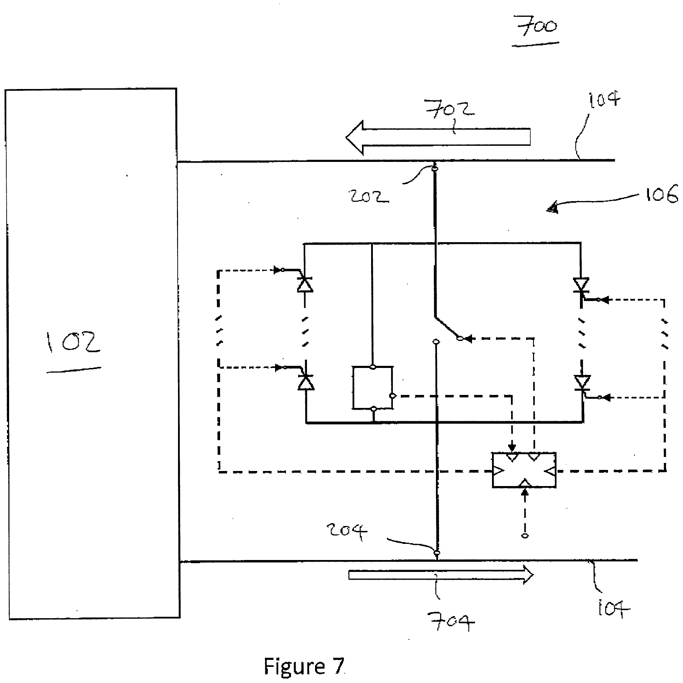

**Figure 7** shows an example circuit 700 including the switch arrangement 106 of Figure 6 coupled to a current pathway through the example network section 102 of Figure 1. The by-pass switch arrangement 106 is shown in a normal configuration in which it is coupled to the current pathway but both primary and secondary switches 212, 222 are open such that there is no by-pass current. In this particular example, the terminals 202, 204 are coupled to the transmission lines 104 extending from the network section 102

The current flow through the current pathway and the switch arrangement in the normal configuration will be described by reference to arrows 702, 704 indicating the magnitude of a current flow. In this example, current flow 702 is received from the transmission line 104 coupled to the first switch terminal 202 and flows to the network section 102. A lower current flow 704 flows from the network section 102 into the transmission line 104 coupled to the second switch terminal 204, indicating net current flow into the network section 102. In the normal configuration of the by-pass switch arrangement, there is no significant current flow through the by-pass switch arrangement.

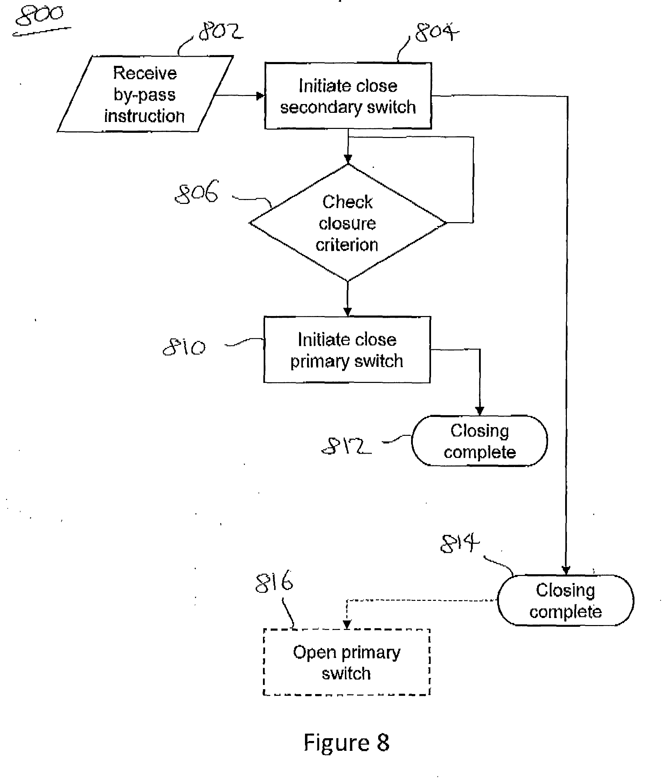

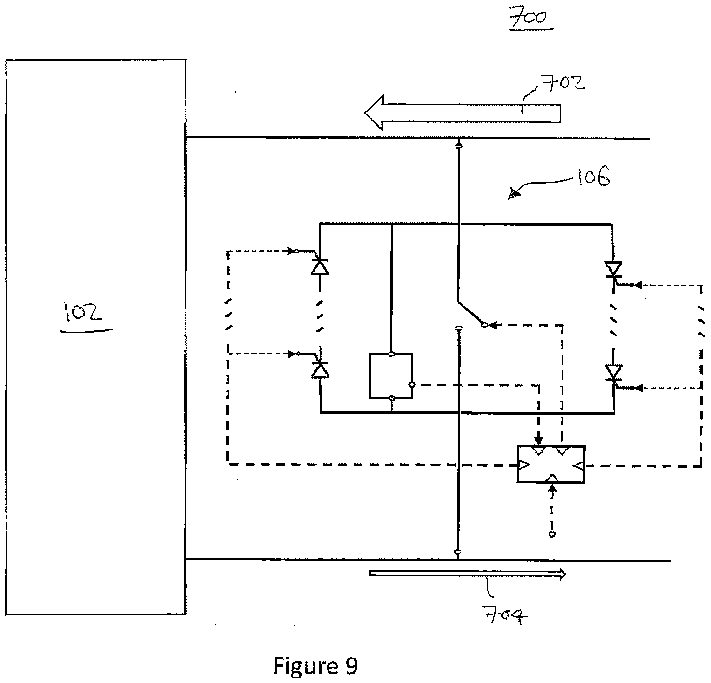

A by-pass operation 800 will now be described with respect to the flowchart of Figure 8 in overview and in detail with respect to the circuit diagrams of Figures 9-11 depicting successive stages of the by-pass operation.

In block 802, a by-pass instruction is received at the switch controller 240 via trigger control line 648. For example, the by-pass instruction may be issued by a fault detector associated with the network 100 or the network section 102 in particular.

Figure 9 shows a snapshot of the circuit 700 when the by-pass instruction is issued. As shown in Figure 9, the current 704 out of the network section is reduced as compared to normal operation, which may indicate a fault within the network section 102 such as a short circuit to ground. At this stage there is still no by-pass current through the by-pass switch arrangement 106.
The switch controller 240 is activated upon receiving the by-pass instruction and immediately initiates closing of the electro-mechanical (secondary) switch of the second by-pass pathway (block 804). In this example, the switch controller 240 subsequently begins checking a closure criterion based on the voltage information control signal received from the voltage divider 630. In other examples, the switch controller 240 may begin such checking immediately upon receiving the by-pass instruction, for example, in parallel with initiating the closing of the electro-mechanical switch.

In this example, the closure criterion is repeatedly evaluated (block 806) to determine whether sufficient power is available for drive circuitry 613 of the solid-state switch 212 to close the respective switch. In this example, the solid-state switch 212 is a thyristor stack which requires a gate current to initiate the by-pass current through the switch. Once the closure criterion is determined to be met, closing of the solid-state switch 212 is initiated (block 810) by the switch controller sending triggering pulses (i.e. control signals) to the drive circuitry of the switch. In this example, the switch controller continues to monitor the closure criterion and send such triggering pulses until it is de-activated or it is determined that the solid-state switch should be opened following commutation of a by-pass current to the electro-mechanical switch. As will be appreciated, when the first by-pass pathway comprises antiparallel branches as has been described above, the switch controller initiates closing of the solid-state switch 212 corresponding to the direction of a by-pass current to be conducted through the by-pass switch arrangement 106.

In this particular example, the drive circuitry for the primary switch is configured to draw energy from the voltage difference across the primary switch. For example, the drive circuitry may include a capacitor which can be charged, and which charge can be released to close the primary switch upon reaching a threshold charge. It will be appreciated that the drive circuitry may depend on the type of primary switch. For example, when the primary switch is a thyristor stack, the drive circuitry is configured to control the supply of gate current. By way of example, when the primary switch is a triggered spark gap switch, the drive circuitry may be configured to control the supply of a voltage pulse to a trigger electrode.

In other examples, the drive circuitry may be charged in advance of fault detection, and the charged state permanently maintained. In such examples, the closing of the primary switch may be initiated sooner, for example upon detection of the fault.

In this example, the closure criterion is a function of the voltage information signal communicated from the voltage divider 630 to the switch controller, which relates to the voltage output from the voltage divider 630. In this particular example, the voltage information signal is the measured voltage output of the voltage divider, and the closure criterion is that the voltage output is above a threshold (for example, 1% or 2% of a rated line-to-earth voltage for the network 100 and by-pass switch arrangement 106. The voltage output of the voltage divider 630 may rise as the voltage difference across the terminals 202, 204 increases. This may occur, for example, when current through the current pathway begins to be interrupted, for example by a circuit breaker.

Figure 8 also indicates when closing of the solid-state and electro-mechanical switches is completed by relative vertical position in the drawing. As will be described in detail below, the solid-state switch 212 is closed first (block 812), followed by completing closing of the electro-mechanical switch (block 814).

In block 812 of Figure 8, closing of the solid-state switch is completed almost immediately after closing is initiated. In this particular example, the solid-state switch completes closing after a minimum closing period of no more than 1ms after initiation of closing, which may be approximately 1.5ms after fault detection (the 0.5ms delay corresponding to the periods for receiving the by-pass instruction, determining that the closure criterion is met and initiating closing of the solid-state switch. The delay may depend on the specific fault and load condition of the network).

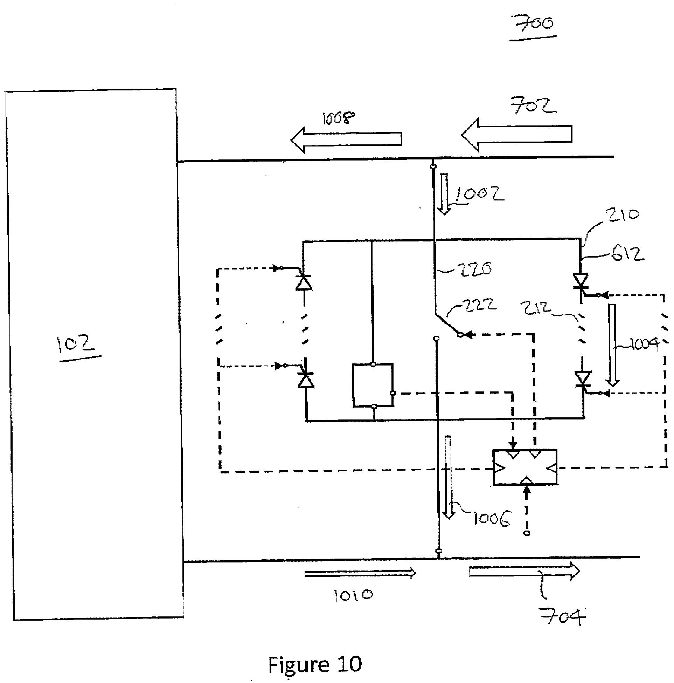

As shown in **Figure 10**, a by-pass current is established and diverted from the transmission line 104 coupled to the first switch terminal 202 through the by-pass switch arrangement 106 upon closing of the solid-state switch 212 of the first branch 612 of the first by-pass pathway 210 (arrows 1002, 1004, 1006). At this stage of the by-pass operation, there is still current flow through the current pathway through the network section (arrows 1008, 1010), but the by-pass current has the effect of reducing current flow through the network section 102. The by-pass current re-joins current flow from the network section in the transmission line 104 at the second switch terminal 204 (arrows 1010, 704).

The primary switch therefore provides a "crowbar" type connection between the transmission lines. In this example, the by-pass current through the solid-state switch 212 causes transient heating of the solid-state switch. For example, when the by-pass current is 3300A and the voltage drop across the solid state switch is 500V, power losses (associated with heating) through the solid-state switch may be 1.7MW. The solid-state switch is not provided with an active cooling system. In particular, there is no circulating fluid/liquid cooling system. Nevertheless, the solid-state switch remains closed for only a short duration, as will be described below, such that it may experience a temperature rise of less than 70°C.

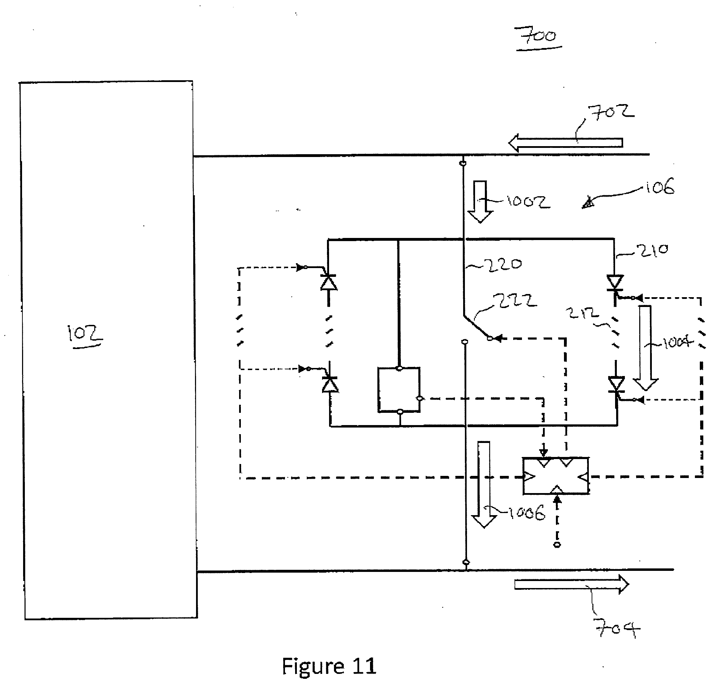

As shown in Figure 11, after closing of the primary switch 212, all current through the pathway through the network section 102 may be commutated to the by-pass switch arrangement 106 (arrows 702, 1002, 1004, 1006, 704). For example, current pathway through the network section 102 may be isolated by other means after closing of the primary switch 212, such as one or more circuit breakers. Transient heating and power losses through the solid-state switch 212 continues.

In this example, current flow through the network section 102 and the by-pass switch arrangement 106 is one-way during the period for closure of the primary switch 212 and the secondary (electro-mechanical) switch. However, in other examples, current flow may reverse direction before the electro-mechanical switch is closed. In some examples, the switch controller may be configured to detect the current reversal and repeat initiating closure of the appropriate primary switch. For example, where two primary switches are provided in anti-parallel, the switch controller may be configured to close the opposite primary switch (and may,cancel, reverse or open the primary switch for which closing was previously initiated). In examples where the primary switch is disposed between outputs of a diode bridge, a second initiation of closing the primary switch may not be required, and therefore the switch controller may not be configured to detect the current reversal. However, in some examples, a further initiation of closing may be conducted in response to current reversal when a primary switch is disposed in a diode bridge. For example, when the primary switch is a triggered spark gap switch disposed within a diode bridge, a current reversal may cause the voltage applied over the switch to drop below a threshold required to trigger or maintain current flow through the switch. Accordingly, the switch controller may be configured to repeat initating closure of the primary switch in response to detecting the current reversal.

In such examples the switch controller may detect a current reversal in any suitable way. For example, the current reversal may be detected using a current monitor. The current reversal may be detected by evaluating the closure criterion and monitoring for a change in voltage or change in voltage sign corresponding to current reversal.

In block 814 of Figure 8, closing of the electro-mechanical switch 222 is completed. In this particular example, closing of the electro-mechanical switch 222 is completed after a minimum closing period of no more than 100ms after initiating closing of the electro-mechanical switch 222. For example, the electro-mechanical switch may have a minimum closing period of between 30ms and 60ms.

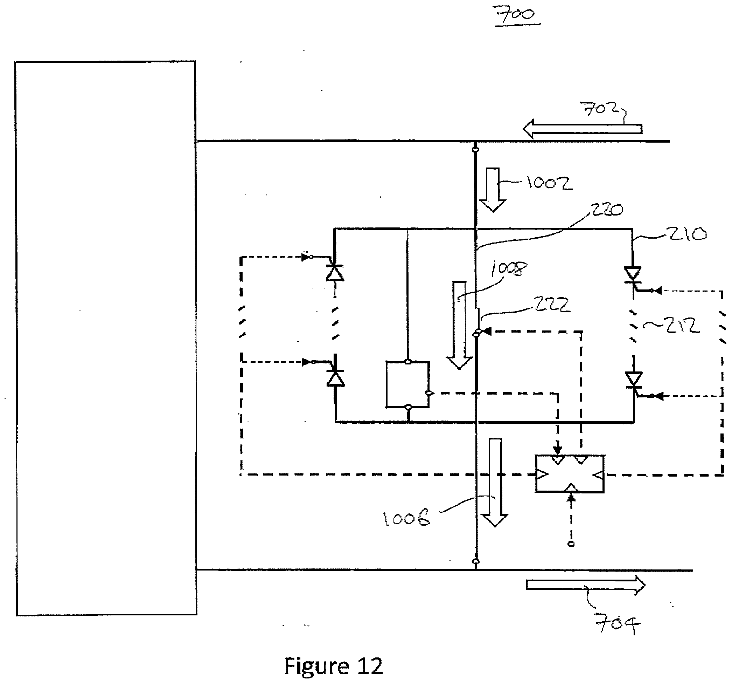

As shown in **Figure 12**, at this stage both the primary switch 212 and the secondary electro-mechanical switch 222 are closed for conducting current through the respective by-pass pathways 210, 220. However, in this example, there is a higher voltage difference over the closed primary switch (i.e. the thyristor stack 212) than over the closed electro-mechanical switch (i.e. the impedance of the primary switch is higher than that of the secondary switch), such that the by-pass current is commutated to the second by-pass pathway (arrows 1002, 1008, 1006) and the current through the primary switch 212 is reduced to zero.

The primary switch 212 is then opened. In this particular example, the primary switch 212 is a thyristor stack, and it will be appreciated that the thyristors will automatically open by themselves (block 816 of Figure 8) once the current flow therethrough is reduced to below a threshold. In other examples, the primary switch may be of a kind which would require active opening. For example, when the primary switch is an IGBT-based switch, the switch controller may control the switch to actively re-open after completion of closing of the electro-mechanical switch (block 816 of Figure 8).

In this example, the transient heating of the primary switch 212 (and associated power losses) therefore ceases when the electro-mechanical switch 222 is fully closed. In this example, the primary switch 212 is closed and conducting the by-pass current for a period of between approximately 30ms and 60ms (i.e. In the order of tens of milliseconds) until the electro-mechanical switch 222 is closed. Accordingly, such heating and power losses may be accommodated without dedicated cooling systems for the solid-state switch.

It may be beneficial to operate other fast-acting switches, including other solid-state switches and spark gap switches, for a relatively short duration as described above. For example, such switches may similarly experience higher power losses, transient heating, or other adverse effects of prolonged use.

By contrast, power losses through the electro-mechanical switch are significantly lower, for example 1kW for a by-pass current of 3300A at 500kV. The by-pass switch arrangement therefore provides fast closing to rapidly establish a by-pass current with high power losses for a limited period of time, and subsequently commutates the by-pass current to a slower-closing by-pass pathway that experiences lower power losses.

Any fault associated with the network section 202 can then be cleared such that the by-pass current through the by-pass switch arrangement 212 can be commutated back to the current pathway through the network section.

In this example the switch controller 240 receives an open instruction and subsequently opens the electro-mechanical switch.

Before opening of the electro-mechanical switch, the by-pass current through the by-pass switch arrangement 106 may be greater than current through the current pathway through the network section 102. Opening of the electro-mechanical switch 222 is conducted by a mechanical drive of the electro-mechanical switch which causes electrodes of the electro-mechanical switch to separate. In this particular example, there is relative movement of the electrodes within an insulated gas filled chamber, resulting in an electrical arc within the chamber. Owing to high impedance within the gas filled chamber, there is a high arc voltage between the electrodes, such that the by-pass current is commutated to the current pathway through the network section 102. The current through the second by-pass pathway 220 (i.e. through the electro-mechanical switch) therefore reduces to zero. In this example, the switch controller 240 is de-activated after opening of the electro-mechanical switch, pending reactivation in the event of a further fault.

Whilst an example of the invention has been described in which the first by-pass pathway comprises a solid-state switch in the form of a thyristor stack (or thyristor string), it will be appreciated that other switching devices may be used as described above. For example, an IGBT-based switch or switches may be used in place of each thyristor stack. As with a thyristor stack, an IGBT-based switch may be a unidirectional current carrying switch. In one example Implementation, the first by-pass pathway may comprise first and second branches for current conductance in respective directions, each branch having an IGBT switch device (which may be a string or stack of IGBT devices in series) and one or more diodes conducting current in the same direction as the respective IGBT to improve the withstand voltage of the respective branch to reverse current. If the IGBT is configured to withstand reverse voltage, no such diodes are needed. In a further example implementation, there may be a single branch having two IGBT switch devices in anti-series relationship that are not capable of withstanding reverse voltage. In this example, each IGBT is provided with a diode mounted in antiparallel with respect to the IGBT switch to avoid build-up of a reverse voltage by carrying current in the opposite direction of the IGBT. An example arrangement of IGBT switches in anti-series is shown in CN204689065.

Although examples have been described with respect to by-passing current pathway through a network section such as a converter (or a network section comprising a converter), it will be appreciated that the by-pass switch arrangement of the invention is equally suitable for by-passing current pathways through other network sections or equipment, such as tie lines for the power transmission network.

## Claims

1. A by-pass switch arrangement (106) for by-passing a current path in a high voltage direct current (HVDC) network (100), the by-pass switch arrangement comprising:
two switch terminals for coupling to the current path;
first and second parallel by-pass pathways (210, 220) between the switch terminals for selectively conducting a by-pass current between the switch terminals;
wherein the first by-pass pathway (210) comprises a primary switch which is a solid-state switch or a triggered spark gap switch (212);
wherein the second by-pass pathway (220) comprises a secondary switch which is an electro-mechanical switch (222) having a longer minimum closing period than the primary switch; and
a switch controller (240) configured to control closing of the primary switch (212) and the secondary switch (222) in response to a by-pass instruction so that the by-pass current initially flows through the first by-pass pathway (210) and is subsequently commutated to the second by-pass pathway (220).

2. A by-pass switch arrangement (106) according to claim 1. wherein the primary switch (212) has a closing period of no more than 1ms.

3. A by-pass switch arrangement (106) according to claim 1 or 2, wherein the switch controller (240) is configured to initiate closing of the secondary switch (222) in response to receipt of the by-pass instruction and subsequently Initiate closing of the primary switch (212) after a delay corresponding to a closure pre-condition for the primary switch (212).

4. A by-pass switch arrangement (106) according to any preceding claim, wherein the switch controller (240) is configured to initiate closing of the primary switch (212) based on evaluating a closure criterion for the primary switch (212) which is a function of a voltage difference across the by-pass switch arrangement.

5. A by-pass switch arrangement (106) according to any preceding claim, further comprising a voltage divider (630) in parallel with the first and second by-pass pathways (210, 220), and wherein the switch controller (240) is configured to initiate closing of the primary switch (212) based on evaluating a closure criterion for the primary switch (212) which is a function of a voltage output of the voltage divider (630).

6. A by-pass switch arrangement (106) according to any of claims 1-4, wherein the switch controller (240) is configured to initiate closing of the primary switch (212) based on evaluating a closure criterion for the primary switch (212) which is a function of respective voltage outputs of two line-to-ground voltage dividers coupled to the respective switch terminals.

7. A by-pass switch arrangement (106) according to any preceding claim, wherein the primary switch comprises a thyristor stack (212).

8. A by-pass switch arrangement (106) according to any preceding claim, wherein the primary switch comprises an IGBT-based switch.

9. A by-pass switch arrangement (106) according to any preceding claim, wherein the primary switch comprises a triggered spark gap switch.

10. A by-pass switch arrangement (106) according to any of claims 7 to 9, wherein the first by-pass pathway (210) comprises two primary switches arranged In antiparallel.

11. A by-pass switch arrangement (106) according to any of claims 1 to 9, wherein there is a diode bridge between the two switch terminals, the diode bridge having two outputs of constant polarity, and wherein the primary switch is disposed between the two outputs of the diode bridge.

12. A by-pass switch arrangement (106) according to claim 11, wherein the first by-pass pathway and the second by-pass pathway are at least party disposed between the two outputs of the diode bridge.

13. A by-pass switch arrangement (106) according to any preceding claim, further comprising two primary disconnectors, each primary disconnector in series with a respective one of the switch terminals, wherein the primary disconnectors are configured to open to isolate a core part of the by-pass switch arrangement comprising the first and second by-pass pathways (210, 220).

14. A by-pass switch arrangement (106) according to claim 13, further comprising an auxiliary by-pass pathway (306) between the switch terminals and In parallel with the primary disconnectors and the core part (206) of the by-pass switch arrangement, the auxiliary by-pass pathway (306) comprising a switch (308) for maintaining a by-pass current when the core part of the by-pass arrangement is isolated.

15. A method of by-passing a current pathway in a direct current (dc) network using a by-pass switch arrangement (106) In accordance with any of claims 1-14 coupled to the current pathway at the switch terminals, the method comprising:
closing the primary switch (212) of the first by-pass pathway (210);
closing the secondary switch (222) of the second by-pass pathway (220);
wherein closing of the primary switch (212) is completed before closing of the secondary switch (222), so that a by-pass current initially flows through the first by-pass pathway (210) and is subsequently commutated to the second by-pass pathway (220).
